(19) Europäisches Patentamt

European Patent Office

Office européen des brevets

(11) **EP 4 329 383 A1**

(12) **EUROPEAN PATENT APPLICATION**

(43) Date of publication:
**28.02.2024 Bulletin 2024/09**

(21) Application number: **22192126.5**

(22) Date of filing: **25.08.2022**

(51) International Patent Classification (IPC):
**H04W 52/02** (2009.01)     **G06F 1/3203** (2019.01)

(52) Cooperative Patent Classification (CPC):
**H04W 52/0258; G06F 1/3203; H04W 52/0248**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Elsner, Christoph
  91052 Erlangen (DE)**
• **Fuhrmann, Iris
  33014 Bad Driburg (DE)**
• **Telschig, Kilian
  81543 München (DE)**

(74) Representative: **Siemens Patent Attorneys
Postfach 22 16 34
80506 München (DE)**

(54) **METHOD AND SYSTEM FOR OPTIMIZING ENERGY CONSUMPTION OF A WIRELESS DEVICE WITH LIMITED ENERGY RESOURCES**

(57)     In order to enable an energy mode to balance between performance and energy efficiency of the wireless device to be optimized ($WD_{opt}$) regarding the energy consumption for specific wireless service use cases it is proposed for optimizing the wireless device of numerous wireless devices within at least one wireless environment including each a wireless mesh network integrating mesh-technology based the numerous wireless devices and at least one wireless access point ($WAP_{WE1}$, $WAP_{WE2}$, $WAP_{WE3}$) with permanent energy resources, wherein according to a client-server-messaging protocol designed to a "publisher-subscriber" principle the wireless devices comprise each a client-related messaging protocol entity ($MPE_{cl}$) and the wireless access point comprise a server-related messaging protocol entity ($MPE_{sv}$) message data (MDT, LDT, RDT) are transported via logical communication links (LCL) network-immanent or cross-network between the client-related messaging protocol entity ($MPE_{cl}$) and the server-related messaging protocol entity ($MPE_{sv}$) , <i> in the course of a local device-specific, computer-implemented optimization implemented in the wireless access point assigned to the wireless device to be optimized within the corresponding wireless environment to collect (clt) log data (LDT) of the wireless device to be optimized at the server-related messaging protocol entity, to determine (dtm) from a content of the collected log data device-specific historical usage data ($UDT_h$), to identify (idf) out of the historical usage data a device-specific usage pattern (UPT), to create (crt) out of the usage pattern a device-specific sleep schedule (SLS) according to which the wireless device to be optimized is put to sleep in anticipated non-usage times, <ii> to send (snd) the sleep schedule from the server-related messaging protocol entity to the wireless device to be optimized.

FIG 2

**Description**

The invention refers to a method for optimizing energy consumption of a wireless device with limited energy resources according to the preamble claim 1 and a system for optimizing energy consumption of a wireless device with limited energy resources according to the preamble claim 6.

Wireless devices with limited energy resources, such as primary and secondary energy storages, are applied in various areas, e.g., as part of smart home equipment, industrial automation and/or medical technology. They have, when operated in a wireless environment including a wireless mesh network, their highest service quality for serving wireless requests, such as immediate response, highest reliability of response, when they are in full awake state. This, however, leads to a high energy consumption and to a need for frequently replacing energy resources. To reduce energy consumption, further energy modes, such as "sleep states", have been introduced in a "Central Processing Unit <CPU>" and wireless network modules of the wireless device, which however reduce service quality of wireless requests, such as response time and response reliability. Thus, the challenge is to choose the right energy mode to balance between performance and energy efficiency for a specific wireless service use case.

Many modern protocols work with Mesh technology on lower communication levels to increase reliability, to avoid single point of failure, and to increase reach. There are active and passive mesh participants (wireless devices) of the wireless mesh network, so some participants forward packages, some other only receive packages and some further ones only send packages.

In addition to that, there are "Central Processing Unit <CPU>" sleep modes besides network sleep modes to save energy resources while the wireless devices are not being used. Due to increased response times, there is a trade-off between keeping the energy consumption low and enabling a high service quality at the same time.

State of practice is that these trade-off decisions are either fixed for a specific device or they are configured manually when bringing the device into operation.

The modern protocol is for instance a client-server-messaging protocol designed to a "publisher-subscriber" principle. Such a messaging protocol can be an open network protocol for "Message Queuing Telemetry Transport <MQTT>" of "Internet of Things <IoT>"-to-"Internet of Things <IoT>" or "Machine-to-Machine <M2M>" communication. The current version of the MQTT-protocol is MQTT 5.0 or shortly MQTT 5.

According to this messaging protocol message data is transported from a client-related messaging protocol entity to a server-related messaging protocol entity.

If according to the filed European Patent Application with the Application No. 21197359.9 of the same applicant a mesh energy optimizer were implemented based on "Artificial Intelligence <AI>"-techniques, in neural networks - especially ensemble networks, which might be applicable for forecasting of energy consumption and communication patterns, then an "Artificial Intelligence <AI>"-on-Edge-method could be used to reduce the size of the neural networks. It also describes a similar technique for handling the initial operation phase, in which no specialized data is available, so a generic model is used instead during this time.

It is an objective of the invention to propose a method and a system for optimizing energy consumption of a wireless device with limited energy resources, by which an energy mode to balance between performance and energy efficiency of the wireless device for specific wireless service use cases is enabled.

This objective is solved with regard to a method defined in the preamble of claim 1 by the features in the characterizing part of claim 1.

The objective is further solved with regard to a system defined in the preamble of claim 6 by the features in the characterizing part of claim 6.

The main idea of the invention according to the claims 1 and 6 for optimizing energy consumption of a wireless device with limited energy resources of numerous wireless devices within at least one wireless environment including each a wireless mesh network integrating mesh-technology based the numerous wireless devices and at least one wireless access point with permanent energy resources, wherein according to a client-server-messaging protocol designed to a "publisher-subscriber" principle the wireless devices comprise each a client-related messaging protocol entity and the wireless access point comprise a server-related messaging protocol entity message data are transported via logical communication links network-immanent or cross-network between the client-related messaging protocol entity and the server-related messaging protocol entity, is

> 1) in the course of a local device-specific, computer-implemented optimization implemented in the wireless access point assigned to the wireless device to be optimized within the corresponding wireless environment
>
>> **1.1)** to collect log data of the wireless device to be optimized at the server-related messaging protocol entity,
>> **1.2)** to determine from a content of the collected log data device-specific historical usage data,
>> **1.3)** to identify out of the device-specific historical usage data a device-specific usage pattern,
>> **1.4)** create out of the device-specific usage pattern a device-specific sleep schedule according to which the wireless device to be optimized is put to sleep in anticipated non-usage times,
>
> 2) to send the device-specific sleep schedule destined for the wireless device to be optimized from the server-related messaging protocol entity of the wireless access point to the wireless device to be optimized.

The sleeping cycles of the wireless device to be optimized are not fixed but dynamically adapted to usage patterns of the device. As a result, the service quality remains high while minimizing the required energy resources.

Alternatively, the local device-specific, computer-implemented optimization can be implemented in a data cloud where the steps **1.1**) to **1.4**) are carried and where the device-specific sleep schedule for forwarding it to the wireless device to be optimized is transferred to the server-related messaging protocol entity of the wireless access point.

Further advantageous developments of the invention claimed in the dependent claims concern:
A power saving profile for the wireless device and/or time-based or event-based sleep schedules or schedules for different power savings modes, such as clock down measures, sleep periods, timing of background processes are implemented when the device-specific sleep schedule is received by the client-related messaging protocol entity of the wireless device to be optimized (cf. claims 2 and 7).

The implemented measures are applied preferably for hardware components of the wireless device such as a central processing unit and WiFi-adapter.

According to the claims 3 and 8, when in a first iterative optimization step of a n-fold iteration-optimization-process with $n \in \mathbb{N}$ the log data of the wireless device to be optimized are not available and thus the device-specific historical usage data cannot be determined, in the course of a global cross-device based, computer-implemented optimization instead of the local device-specific, computer-implemented optimization a first generic sleep schedule is created by deriving in order to train the first generic sleep schedule at least one first generic strategic pattern from first reference data such that on the basis of the first reference data the first generic strategic pattern for the first generic sleep schedule is calculated and the first generic sleep schedule is sent instead of the sleep schedule to the wireless device to be optimized.

Alternatively, also the global cross-device based, computer-implemented optimization can be implemented in the data cloud where the first generic sleep schedule is created and for forwarding it to the wireless device to be optimized is transferred instead of the sleep schedule to the server-related messaging protocol entity of the wireless access point.

According to the claims 4 and 9, when in a second iterative optimization step of the n-fold iteration-optimization-process with $n \in \mathbb{N}$ the first generic sleep schedule and/or the first generic strategic pattern as a first device-specific sub-usage data of the wireless device to be optimized are available, in the course of the global cross-device based, computer-implemented optimization instead of the local device-specific, computer-implemented optimization a second generic sleep schedule is created by deriving in order to train the second generic sleep schedule at least one second generic strategic pattern from second reference data including the first reference data and the first device-specific sub-usage data such that on the basis of the second reference data the second generic strategic pattern for the second generic sleep schedule is calculated and the second generic sleep schedule is used to refine the first generic sleep schedule and sent instead of the first generic sleep schedule to the wireless device to be optimized.

Alternatively, also here the global cross-device based, computer-implemented optimization can be implemented in the data cloud where the second generic sleep schedule is created and for forwarding it to the wireless device to be optimized is transferred instead of the first generic sleep schedule to the server-related messaging protocol entity of the wireless access point.

According to the claims 5 and 10, when the n-fold iteration-optimization-process with $n \in \mathbb{N}$ is run through by "n" iterative optimization steps until a "n-1"-th device-specific sub-usage data formed by a sum of the first generic sleep schedule to a "n-1"-th generic sleep schedule and/or a sum of the first generic strategic pattern to a "n-1"-th generic strategic pattern of the wireless device to be optimized correspond essentially to the device-specific historical usage data, in the course of the global cross-device based, computer-implemented optimization instead of the local device-specific, computer-implemented optimization a n-th generic sleep schedule is created by deriving in order to train the n-th generic sleep schedule at least one n-th generic strategic pattern from n-th reference data including the (n-1)-th reference data and the "n-1"-th device-specific sub-usage data such that on the basis of the n-th reference data the n-th generic strategic pattern for the n-th generic sleep schedule is calculated and the n-th generic sleep schedule, which correspond essentially to the device-specific sleep schedule, is sent to the wireless device to be optimized.

Alternatively, also here the global cross-device based, computer-implemented optimization can be implemented in the data cloud where the n-th generic sleep schedule is created and for forwarding it to the wireless device to be optimized is transferred to the server-related messaging protocol entity of the wireless access point.

The main idea of the invention and the advantageous developments outlined above can be paraphrased by the following:
The proposed method or system will control and optimize the sleep and wake cycle times of the wireless device to be optimized in order to mitigate the trade-off between low energy consumption and high service availability. The system consists of the following setup: A wireless mesh network distributed over at least one wireless environment and comprising network nodes in the form of (i) a wireless device to be optimized of numerous wireless devices, such as IoT/M2M mesh devices, including each a client-related messaging protocol entity comprising a log data sender assigned to a log data component of the wireless device and a sleep schedule receiver as well as **(ii)** at least one wireless access point, such as an IoT/M2M broker, including a server-related messaging protocol entity comprising a log data receiver and a sleep schedule sender assigned each to an computer-implemented optimization unit.

Each wireless device respectively IoT/M2M mesh device logs a traffic that goes over its node, The logged traffic in the form of log data includes e.g., sender, receiver, timestamp, URL, package identifier. These log data are usually stored and sent to the wireless access point respectively the IoT/M2M broker preferably by an open network protocol for "Message Queuing Telemetry Transport <MQTT>" (**a**) only to the wireless access point as MQTT broker after longer periods of time, or (**b**) "piggyback" when anyway communicating with the MQTT broker. In "MQTT 5" this could be done via a base64-encoded custom header, otherwise via a non-standard custom "Hypertext Transfer Protocol < HTTP >" header. The data log receiver component of the IoT/M2M broker receives and stores the received data.

Since the wireless access point, the IoT/M2M broker respectively the MQTT broker typically has permanent energy supply, it can use the computer-implemented optimization unit to optimize the energy consumption of the wireless device to be optimized in the wireless mesh network. The sleep schedule calculated from the optimization unit is sent to the wireless device to be optimized respectively the IoT/M2M mesh device.

The core aspect of the proposed method or system is a computer-implemented optimization. In local device-specific shaping historical usage data determined from collected log data of the wireless device to be optimized is used to identify at least one usage pattern of the wireless device to be optimized. Based on this pattern, a device-specific sleep schedule is created and sent to the wireless device to be optimized respectively the IoT/M2M mesh device. This sleep schedule is optimized to reduce energy consumption as much as possible by putting the device to sleep in non-usage times while ensuring a high service quality by setting the device state to full awake before it is being used.

Since there is no historical data available when the wireless device to be optimized is first being used, the computer-implemented optimization has a global cross-device based shaping uses at least one generic strategic pattern derived from reference data collected from other devices of the numerous wireless devices in the at least one wireless environment (e.g., from devices of the same type in the same wireless environment, from devices of different types within the same wireless environment or from devices of the same or different type from other wireless environments) to train a generic sleep schedule. When the generic sleep schedule is created in this way it is sent to the wireless device to be optimized respectively the IoT/M2M mesh device.

The reference data include preferably

- other device-specific historical data,
- other device-specific usage patterns identified out of the other device-specific historical data,
- other device-specific sleep schedules created out of the other device-specific usage patterns,
- device data about each other device of the other devices being used,
- topology data about the other devices relations to each other,
- interactions data about individual interactions of the other devices,
- typical interaction patterns of the other devices , and/or
- success criteria of the other device-specific sleep schedules such as "Key Performance Indicators <KPI's>" for device energy consumption and/or "Key Performance Indicators <KPI's>".

On the basis of the reference data the generic strategic pattern for the first generic sleep schedule is calculated preferably to a "If-Then-rule" such as "if (type of type = temperature sensor of company X) and if (device is used in conjunction with device of type display of company X), then sleep schedule wakeup period should be set to 30 seconds for the temperature device".

Initially, when there is no log data of the wireless device to be optimized available, the generic sleep schedule will be fully based on the at least one generic strategic pattern. Over time, as more device-specific data becomes available, the cross-device based data is incrementally being replaced by the device-specific data. At some point of time, the generic sleep schedule as well as the sleep schedule are based essentially on solely device-specific data.

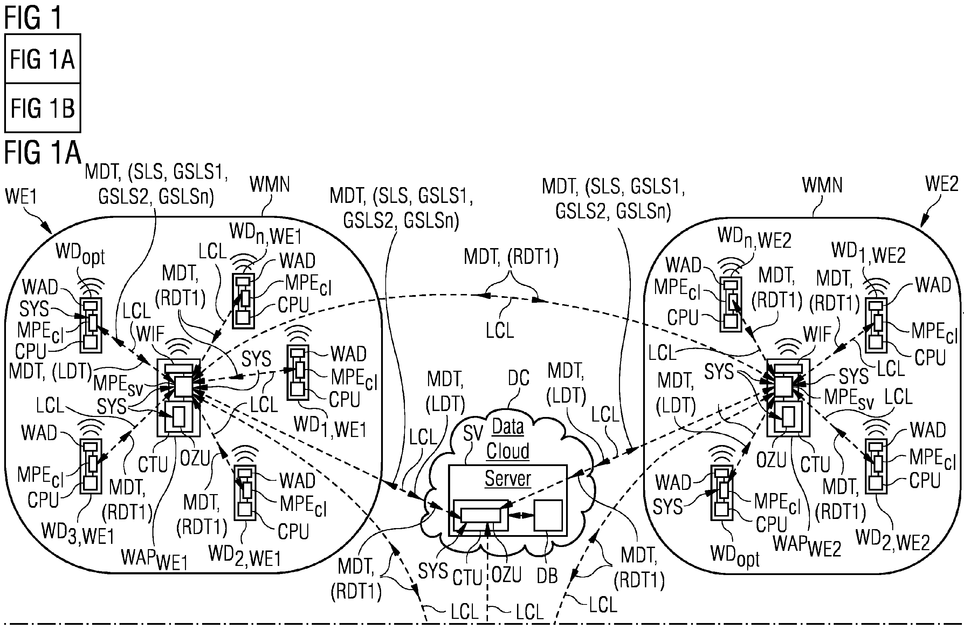

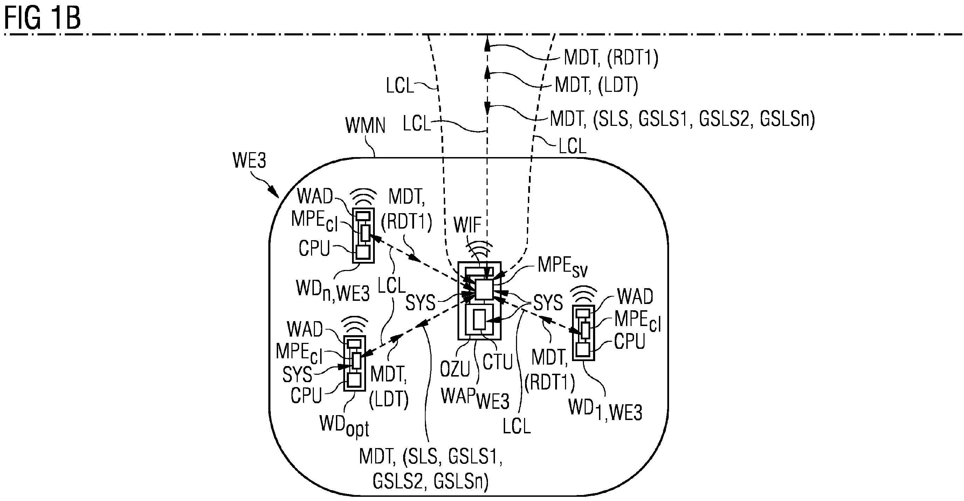

Moreover, advantageous further developments of the invention arise out of the following description of a preferred embodiment of the invention according to FIGURES 1 to 5. They show:

FIGURE 1 a wireless mesh network scenario for optimizing energy consumption of a wireless device with limited energy resources,

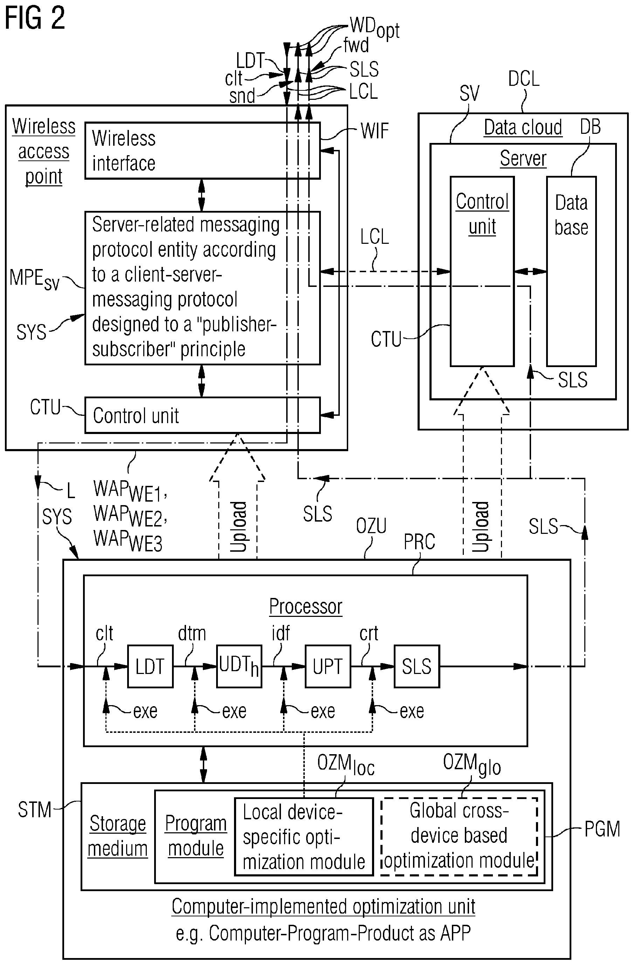

FIGURE 2 based on the scenario of the FIGURE 1 a system for optimizing energy consumption of a wireless device with limited energy resources in the course of a local device-specific, computer-implemented optimization,

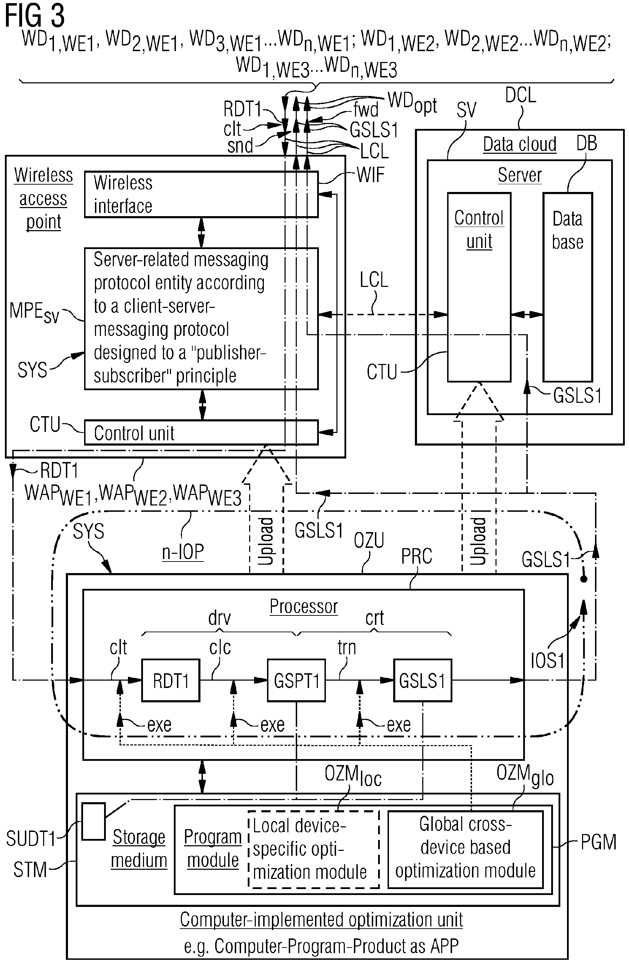

FIGURE 3 based on the scenario of the FIGURE 1 the system for optimizing energy consumption of the wireless device with limited energy resources in the course of a global cross-device based, computer-implemented optimization according to a first iterative optimization step of a n-fold iteration-optimization-process,

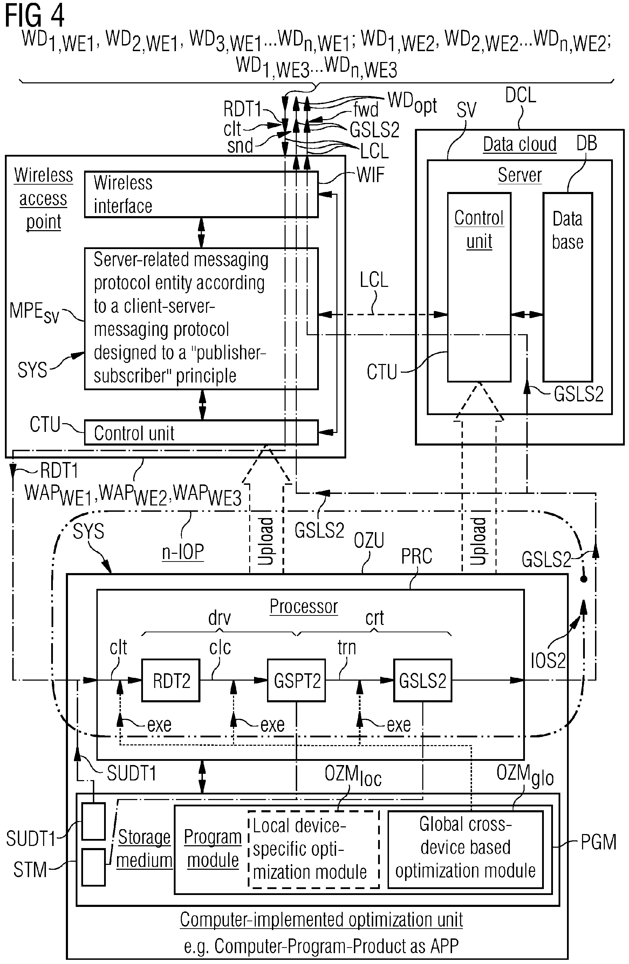

FIGURE 4 based on the scenario of the FIGURE 1 the system for optimizing energy consumption of the wireless device with limited energy resources in the course of the global cross-device based, computer-implemented optimization according to a second iterative optimization step of a n-fold iteration-optimization-process,

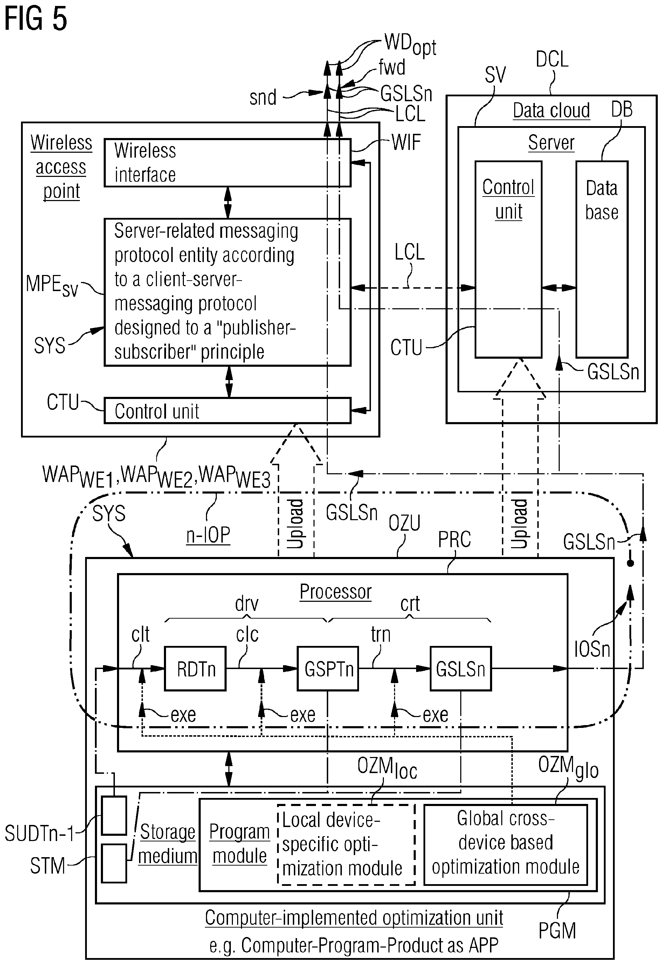

FIGURE 5 based on the scenario of the FIGURE 1 the system for optimizing energy consumption of the wireless device with limited energy resources in the course of the global cross-device based, computer-implemented optimization according to a n-th iterative optimization step of a n-fold iteration-optimization-process.

FIGURE 1 shows a wireless mesh network scenario for optimizing energy consumption of a wireless device $WD_{opt}$ with limited energy resources, which has to be optimized. Depicted are three wireless environments, a first wireless environment WE1, a second wireless environment WE2 and a third wireless environment WE3 including each a wireless mesh network WMN. The number of wireless environments is basically arbitrary for the preferred embodiment, but there should be at least one wireless environment. The shaping of the wireless environment WE1, WE2, WE3 could be related to different technical domains, such as industry automation, smart building, medical applications etc., and/or geographical locations, such as urban (towns) or rural (villages).

In each wireless environment WE1, WE2, WE3 numerous wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$ including inter alia each the wireless device to be optimized $WD_{opt}$ and at least one wireless access point using each permanent energy resources are located, which due to the wireless mesh network WMN are mesh-technology based integrated.

So, for example

- the first wireless environment WE1 includes five wireless devices, the wireless device to be optimized $WD_{opt}$ and four further devices, a first wireless devices $WD_{1,WE1}$, a second wireless devices $WD_{2,WE1}$, a third wireless devices $WD_{3,WE1}$ and a n-th wireless devices $WD_{n,WE1}$ with n=4 as well as a wireless access point $WAP_{WE1}$.
- the second wireless environment WE2 includes four wireless devices, the wireless device to be optimized $WD_{opt}$ and three further devices, a first wireless devices $WD_{1,WE2}$, a second wireless devices $WD_{2,WE2}$

and a n-th wireless devices $WD_{n,WE2}$ with n=3 as well as a wireless access point $WAP_{WE2}$.
- the third wireless environment WE3 includes three wireless devices, the wireless device to be optimized $WD_{opt}$ and two further devices, a first wireless devices $WD_{1,WE3}$ and a n-th wireless devices $WD_{n,WE3}$ with n=2 as well as a wireless access point $WAP_{WE3}$.

Within the wireless environments WE1, WE2, WE3 the cited wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$ and the wireless access points $WAP_{WE1}$, $WAP_{WE2}$, $WAP_{WE3}$ communicate mesh-technology based with each other wirelessly over a WiFi-adapter WAD, which is included in each device and connected with a central processing CPU contained in the wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$, and a wireless interface WIF, which is included in each access point and connected with a control unit CTU contained in the wireless access points $WAP_{WE1}$, $WAP_{WE2}$, $WAP_{WE3}$.

Besides this physical (wireless) connection links there also logical communication links LCL, which are depicted in dashed lines over which the cited wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD{n,WE2}$; $WD_{1,WE3}$,... $WD_{opt}$,... $WD_{n,WE3}$ and the wireless access points $WAP_{WE1}$, $WAP_{WE2}$, $WAP_{WE3}$ communicate for a data transfer network-immanent (within the single wireless environment WE1, WE2, WE3) and/or cross-network (between two wireless environment WE1, WE2; WE1 WE3; WE2, WE3).

Over these logical communication links LCL a client-server-messaging protocol designed to a "publisher-subscriber" principle is processed. This messaging protocol is preferably the open network protocol for "Message Queuing Telemetry Transport <MQTT>" of "Internet of Things <IoT>"-to-"Internet of Things <IoT>" / "Machine-to-Machine <M2M>" communication mentioned already at the beginning of this document.

According to this messaging protocol respectively the MQTT-protocol transport message data MDT is transferred network-immanent and/or cross-network via the logical communication links LCL. Which kind of data this is will be explained and outlined by the description of FIGURES 2 to 5.

For executing the messaging protocol respectively the MQTT-protocol, in which the wireless access points $WAP_{WE1}$, $WAP_{WE2}$, $WAP_{WE3}$ act as "server-entities" and the wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$ act as "client-entities", each wireless access point $WAP_{WE1}$, $WAP_{WE2}$, $WAP_{WE3}$ includes a server-related messaging protocol entity $MPE_{sv}$, which is assigned or connected to the wireless interface WIF and the control unit CTU and each wireless device $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$ .... $WD_{n,WE3}$ includes a client-related messaging protocol entity $MPE_{cl}$, which is assigned or connected to the WiFi-adapter WAD and the central processing unit CPU. Via the client-related messaging protocol entity $MPE_{cl}$ of each the numerous wireless devices $WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$... $WD_{n,WE3}$ and the server-related messaging protocol entity $MPE_{sv}$ of the wireless access point $WAP_{WE1}$, $WAP_{WE2}$, $WAP_{WE3}$ the cited message data MDT is exchanged.

In order to optimize the energy consumption of the wireless device to be optimized $WD_{opt}$, which can be located in each of the three wireless environments WE, WE2, WE3, the control unit CTU of the wireless access point $WAP_{WE1}$, $WAP_{WE2}$, $WAP_{WE3}$ becomes charged with a computer-implemented optimization unit OZU. The computer-implemented optimization unit OZU is preferably designed as a Computer-Program-Product, such as an APP, which can be uploaded or is uploadable into the control unit CTU.

When the computer-implemented optimization unit OZU is uploaded into the control unit CTU, the uploaded computer-implemented optimization unit OZU together with the server-related messaging protocol entity $MPE_{sv}$ of the wireless access point $WAP_{WE1}$, $WAP_{WE2}$, $WAP_{WE3}$ and the client-related messaging protocol entity $MPE_{cl}$ of the wireless device to be optimized $WD_{opt}$ are components of a system SYS for optimizing the energy consumption of the wireless device to be optimized $WD_{opt}$ in one of the wireless environments WE, WE2, WE3 or in all of the wireless environments WE, WE2, WE3.

How the optimization is executed by the cited system SYS will be explained and outlined in the context of describing the FIGURES 2 to 5.

The FIGURE 1 shows an alternative way to optimize the energy consumption of the wireless device to be optimized $WD_{opt}$, which can be located in each of the three wireless environments WE, WE2, WE3. This alternative way is realized by embedding of a data cloud DCL into the system SYS for optimizing the energy consumption of the wireless device to be optimized $WD_{opt}$ in one of the wireless environments WE, WE2, WE3 or in all of the wireless environments WE, WE2, WE3. The data cloud DCL is preferably formed by a server SV including a control unit CTU and a database DB connected with the control unit CTU. The server SV of the data cloud DCL is connected via the logical communication links LCL with the server-related messaging protocol entity $MPE_{sv}$ of the wireless access point $WAP_{WE1}$, $WAP_{WE2}$, $WAP_{WE3}$.

In order to optimize the energy consumption of the wireless device to be optimized $WD_{opt}$, which can be located in each of the three wireless environments WE, WE2, WE3, the control unit CTU of the data cloud DCL becomes charged with a computer-implemented optimization unit OZU. Also here, the computer-implemented optimization unit OZU is preferably designed as a Computer-Program-Product, such as an APP, which can be uploaded or is uploadable into the control unit CTU.

So, the message data MDT is transferred on the logical communication links LCL being expanded to the data cloud DCL between the client-related messaging protocol entity $MPE_{cl}$ of each the numerous wireless devices $WD_{1,WE1}$, $WD_{2,WE1}$, $WD_{3,WE1}$, ... $WD_{opt}$, ...$WD_{n,WE1}$; $WD_{1,WE2}$, $WD_{2,WE2}$,... $WD_{opt}$, ...$WD_{n,WE2}$; $WD_{1,WE3}$, ... $WD_{opt}$, ...$WD_{n,WE3}$ via a server-related messaging protocol entity $MPE_{sv}$ of the wireless access point $WAP_{WE1}$, $WAP_{WE2}$, $WAP_{WE3}$ and the data cloud DCL being assigned to the wireless environment WE1, WE2, WE3.

When the computer-implemented optimization unit OZU is uploaded into the control unit CTU of the data cloud DCL, the uploaded computer-implemented optimization unit OZU together with the server-related messaging protocol entity $MPE_{sv}$ of the wireless access point $WAP_{WE1}$, $WAP_{WE2}$, $WAP_{WE3}$ and the client-related messaging protocol entity $MPE_{cl}$ of the wireless device to be optimized $WD_{opt}$ are components of the system SYS for optimizing the energy consumption of the wireless device to be optimized $WD_{opt}$ in one of the wireless environments WE, WE2, WE3 or in all of the wireless environments WE, WE2, WE3 alternatively.

How this alternative optimization is executed by the cited system SYS will be explained and outlined again in the context of describing the FIGURES 2 to 5.

FIGURE 2 shows based on the scenario of the FIGURE 1 both systems SYS, the wireless access point based one and the data cloud based one, for optimizing the energy consumption of the wireless device to be optimized $WD_{opt}$ in the course of a local device-specific, computer-implemented optimization.

For this purpose, the computer-implemented optimization unit OZU includes a non-volatile, processor-readable storage medium STM having processor-readable program-instructions of a program module PGM for optimizing energy consumption including a local device-specific optimization module $OZM_{loc}$ and a global cross-device based optimization module $OZM_{glo}$ stored in the non-transitory, processor-readable storage medium STM and a processor PRC connected with the storage medium STM executing the processor-readable program-instructions of the program module PGM to enable the energy consumption optimization.

At this point in the description of the FIGURE 2 in contrast to later on when the FIGURES 3 to 5 are described the global cross-device based optimization module $OZM_{glo}$ as part of the program module PGM is not used and executed by the processor PRC. For this reason the rectangular shaping of the global cross-device based optimization module $OZM_{glo}$ is depicted in dotted lines. In other words: Regarding the FIGURE 2 the local device-specific optimization module $OZM_{loc}$ is active in the computer-implemented optimization unit OZU, whereas regarding the FIGURES 3 to 5 the global cross-device based optimization module $OZM_{glo}$ is active in the computer-implemented optimization unit OZU.

If the computer-implemented optimization unit OZU designed in this way is now according to the FIGURE 1 implemented either in the wireless access point $WAP_{WE1}$, $WAP_{WE2}$, WAPWE3 assigned to the wireless device to be optimized within the corresponding wireless environment or in the data cloud DCL, then it forms according to the FIGURE 1 a functional unit with the client-related messaging protocol entity and the server-related messaging protocol entity $MPE_{sv}$, which is assigned directly or indirectly via the logical communications links LCL to the optimization unit OZU.

Being implemented as described the computer-implemented optimization unit OZU is designed as follows:

    **1.** In a first step in the course of the local device-specific, computer-implemented optimization by executing exe the local device-specific optimization module $OZM_{loc}$ through the processor PRC

- log data LDT of the wireless device to be optimized $WD_{opt}$ received over the wireless interface WIF of the wireless access point $WAP_{WE1}$, $WAP_{WE2}$, WAPWE3 at the server-related messaging protocol entity $MPE_{sv}$ are collected clt, which are transferred - according to the wireless access point implementation - network-immanent via the logical communication links to the wireless access point $WAP_{WE1}$, $WAP_{WE2}$, $WAP_{WE3}$ or alternatively - according to the data cloud implementation - via the wireless access point $WAP_{WE1}$, $WAP_{WE2}$, $WAP_{WE3}$ and the logical communication links to the data cloud DCL,
- from a content of the collected log data LDT device-specific historical usage data $UDT_h$ are determined dtm,
- out of the device-specific historical usage data $UDT_h$ a device-specific usage pattern UPT is identified idf,
- out of the device-specific usage pattern UPT a device-specific sleep schedule SLS is created crt, which is done preferably by computer calculation, according to which the wireless device to be optimized $WD_{opt}$ is put to sleep in anticipated non-usage times.

    **2.** In a second step the device-specific sleep schedule SLS destined for the wireless device to be optimized $WD_{opt}$ is sent snd - according to the wireless access point implementation - from the server-related messaging protocol entity $MPE_{sv}$ over the wireless interface WIF of the wireless access point $WAP_{WE1}$, $WAP_{WE2}$, $WAP_{WE3}$ to the wireless device to be optimized $WD_{opt}$ or alternatively - according to the data cloud implementation - the device-specific sleep schedule SLS received from the data cloud DCL and destined for the wireless device to be optimized $WD_{opt}$ is forwarded fwd by the server-related messaging protocol entity $MPE_{sv}$ over the wireless interface WIF to the wireless device to be optimized $WD_{opt}$.

The device-specific sleep schedule SLS received by the client-related messaging protocol entity $MPE_{cl}$ of the wireless device to be optimized $WD_{opt}$ is applied in the wireless device in an advantageous manner by implementing a power saving profile for the wireless device and/or time-based or event-based sleep schedules or schedules for different power savings modes, such as clock down measures, sleep periods, timing of background processes.

These measures are applied preferably for hardware components of the wireless device such as the central processing unit and the WiFi-adapter.

FIGURE 3 shows both systems SYS, the wireless access point based one and the data cloud based one, for optimizing the energy consumption of the wireless device to be optimized $WD_{opt}$ in the course of a global cross-device based, computer-implemented optimization according to a first iterative optimization step of a n-fold iteration-optimization-process.

For this purpose, the computer-implemented optimization unit OZU is designed again such as outlined in the description of the FIGURE 2.

As already outlined by describing the FIGURE 2, regarding the FIGURE 3 and the further FIGURES 4 and 5 the global cross-device based optimization module $OZM_{glo}$ is active in the computer-implemented optimization unit OZU. For this reason now the rectangular shaping of the local device-specific optimization module $OZM_{loc}$ is depicted in dotted lines.

If the computer-implemented optimization unit OZU designed in this way is now according to the FIGURE 1 implemented either in the wireless access point $WAP_{WE1}$, $WAP_{WE2}$, WAPWE3 assigned to the wireless device to be optimized within the corresponding wireless environment or in the data cloud DCL, then it forms according to the FIGURE 1 again the functional unit with the client-related messaging protocol entity and the server-related messaging protocol entity $MPE_{sv}$, which is assigned directly or indirectly via the logical communications links LCL to the optimization unit OZU.

Being implemented as described the computer-implemented optimization unit OZU is designed as follows:

    **1.** In a first step in the course of the global cross-device based, computer-implemented optimization by executing exe the global cross-device based optimization module $OZM_{glo}$ through the processor PRC,

when in a first iterative optimization step IOS1 of a n-fold iteration-optimization-process n-IOP

with $n \in \mathbb{N}$ the log data of the wireless device to be optimized are not available at the server-related messaging protocol entity $MPE_{sv}$, e.g., because of the wireless device to be optimized is launched newly within the wireless mesh network of the at least one wireless environment, and thus the device-specific historical usage data cannot be determined (cf. FIGURE 2 with the corresponding description),
a first generic sleep schedule GSLS1 is created crt.

This creation happens such that by deriving drv in order to train trn the first generic sleep schedule GSLS1 at least one first generic strategic pattern GSPT1 from first reference data RDT1, which are collected clt from other devices $WD_{1,WE1}$, $WD_{2,WE1}$, $WD_{3,WE1}$,... $WD_{n,WE1}$; $WD_{1,WE2}$, $WD_{2,WE2}$,... $WD_{n,WE2}$; $WD_{1,WE3}$,... $WD_{n,WE3}$ of the numerous wireless devices except the wireless device to be optimized and transferred - according to the wireless access point implementation - either network-immanent or cross-network based via the logical communication links to the wireless access point $WAP_{WE1}$, $WAP_{WE2}$, $WAP_{WE3}$ or alternatively - according to the data cloud implementation - via the wireless access point $WAP_{WE1}$, $WAP_{WE2}$, $WAP_{WE3}$ and the logical communication links to the data cloud DCL,
on the basis of the first reference data RDT1 the first generic strategic pattern GSPT1 for the first generic sleep schedule GSLS1 is calculated clc.

Thereby the calculation is carried out preferably according to a "If-Then-rule" and the first reference data RDT1 preferably includes (i) other device-specific historical data, (ii) other device-specific usage patterns identified out of the other device-specific historical data, (iii) other device-specific sleep schedules created out of the other device-specific usage patterns, (iv) device data about each other device of the other devices being used, (v) topology data about the other devices relations to each other, (vi) interactions data about individual interactions of the other devices, (vii) typical interaction patterns of the other devices, and/or **(viii)** success criteria of the other device-specific sleep schedules such as "Key Performance Indicators <KPI's>" for device energy consumption and/or "Key Performance Indicators <KPI's>".

**2.** In a second step the first generic sleep schedule GSLS1 destined for the wireless device $WD_{opt}$ is sent snd instead of the sleep schedule SLS - according to the wireless access point implementation - from the server-related messaging protocol entity $MPE_{sv}$ to the wireless device to be optimized $WD_{opt}$ or alternatively - according to the data cloud implementation - the first generic sleep schedule GSLS1, destined for the wireless device to be optimized $WD_{opt}$ and the server-related messaging protocol entity $MPE_{sv}$ received from the data cloud DCL, is forwarded fwd instead of the sleep schedule SLS by the server-related messaging protocol entity $MPE_{sv}$ to the wireless device to be optimized $WD_{opt}$.

FIGURE 4 shows both systems SYS, the wireless access point based one and the data cloud based one, for optimizing the energy consumption of the wireless device to be optimized $WD_{opt}$ in the course of a global cross-device based, computer-implemented optimization according to a second iterative optimization step of a n-fold iteration-optimization-process.

For this purpose, also here the computer-implemented optimization unit OZU is designed again such as outlined in the description of the FIGURE 2.

As already outlined by describing the FIGURE 3 the global cross-device based optimization module $OZM_{glo}$ is active in the computer-implemented optimization unit OZU. For this reason the rectangular shaping of the local device-specific optimization module $OZM_{loc}$ is depicted again in dotted lines.

If the computer-implemented optimization unit OZU designed in this way is now according to the FIGURE 1 implemented either in the wireless access point $WAP_{WE1}$, $WAP_{WE2}$, WAPWE3 assigned to the wireless device to be optimized within the corresponding wireless environment or in the data cloud DCL, then it forms according to the FIGURE 1 again the functional unit with the client-related messaging protocol entity and the server-related messaging protocol entity $MPE_{sv}$, which is assigned directly or indirectly via the logical communications links LCL to the optimization unit OZU.

Being implemented as described the computer-implemented optimization unit OZU is designed as follows:

**1.** In a first step in the course of the global cross-device based, computer-implemented optimization by executing exe the global cross-device based optimization module $OZM_{glo}$ through the processor PRC,

when in a second iterative optimization step IOS2 of the n-fold iteration-optimization-process

n-IOP with $n \in \mathbb{N}$ the first generic sleep schedule GSLS1 and/or the first generic strategic pattern GSPT1 as a first device-specific sub-usage data SUDT1 of the wireless device to be optimized WDopt are available in the computer-implemented optimization unit OZU,
a second generic sleep schedule GSLS2 is created crt.

The first device-specific sub-usage data SUDT1 of the wireless device to be optimized WDopt is stored in the storage medium STM of the optimization unit OZU, as soon as the first generic sleep schedule GSLS1 is created (cf. FIGURE 3)

This creation happens such that by deriving drv in order to train trn the second generic sleep schedule GSLS2 at least one second generic strategic pattern GSPT2 from second reference data RDT2, which are collected clt and include the first reference data RDT1 and the first device-specific sub-usage data SUDT1, wherein the first reference data RDT1 are transferred - according to the wireless access point implementation - either network-immanent or cross-network based via the logical communication links to the wireless access point $WAP_{WE1}$, $WAP_{WE2}$, $WAP_{WE3}$ or alternatively - according to the data cloud implementation - via the wireless access point $WAP_{WE1}$, $WAP_{WE2}$, $WAP_{WE3}$ and the logical communication links to the data cloud DCL,

on the basis of the first reference data RDT2 the second generic strategic pattern GSPT2 for the second generic sleep schedule GSLS2 is calculated clc.

Thereby the calculation is carried out again preferably according to a "If-Then-rule".

**2.** In a second step the second generic sleep schedule GSLS2 destined for the wireless device $WD_{opt}$ is used to refine the first generic sleep schedule GSLS1 and sent snd instead of instead of the first generic sleep schedule GSLS1 - according to the wireless access point implementation - from the server-related messaging protocol entity $MPE_{sv}$ to the wireless device to be optimized $WD_{opt}$ or alternatively - according to the data cloud implementation - the second generic sleep schedule GSLS2, destined for the wireless device to be optimized $WD_{opt}$ and the server-related messaging protocol entity $MPE_{sv}$ received from the data cloud DCL, is forwarded fwd instead of instead of the first generic sleep schedule GSLS1 by the server-related messaging protocol entity $MPE_{sv}$ to the wireless device to be optimized $WD_{opt}$.

FIGURE 5 shows both systems SYS, the wireless access point based one and the data cloud based one, for optimizing the energy consumption of the wireless device to be optimized $WD_{opt}$ in the course of a global cross-device based, computer-implemented optimization according to a n-th iterative optimization step of a n-fold iteration-optimization-process with $n \in \mathbb{N}$.

For this purpose, also here the computer-implemented optimization unit OZU is designed again such as outlined in the description of the FIGURE 2.

As already outlined by describing the FIGURE 4 the global cross-device based optimization module $OZM_{glo}$ is active in the computer-implemented optimization unit OZU. For this reason the rectangular shaping of the local device-specific optimization module $OZM_{loc}$ is depicted again in dotted lines.

If the computer-implemented optimization unit OZU designed in this way is now according to the FIGURE 1 implemented either in the wireless access point $WAP_{WE1}$, $WAP_{WE2}$, WAPWE3 assigned to the wireless device to be optimized within the corresponding wireless environment or in the data cloud DCL, then it forms according to the FIGURE 1 again the functional unit with the client-related messaging protocol entity and the server-related messaging protocol entity $MPE_{sv}$, which is assigned directly or indirectly via the logical communications links LCL to the optimization unit OZU.

Being implemented as described the computer-implemented optimization unit OZU is designed as follows:

1. In a first step in the course of the global cross-device based, computer-implemented optimization by executing exe the global cross-device based optimization module $OZM_{glo}$ through the processor PRC, the n-fold iteration-optimization-process with $n \in \mathbb{N}$ is run through by "n" iterative optimization steps IOS1,... IOSn until a "n-1"-th device-specific sub-usage data SUDTn-1 formed by a sum of the first generic sleep schedule GSLS1 to a "n-1"-th generic sleep schedule and/or a sum of the first generic strategic pattern GSPT1 to a "n-1"-th generic strategic pattern of the wireless device to be optimized $WD_{opt}$, which are available in the computer-implemented optimization unit OZU, correspond essentially to the device-specific historical usage data, wherein accordingly a n-th generic sleep schedule GSLSn is created crt.

The first device-specific sub-usage data SUDTn-1 of the wireless device to be optimized WDopt is stored in the storage medium STM of the optimization unit OZU, as soon as the "n-1"-th generic sleep schedule is created, which is not depicted anymore, but the creation is implied (cf. FIGURE 5)

The creation of the n-th generic sleep schedule GSLSn happens such that by deriving drv in order to train trn the n-th generic sleep schedule GSLSn at least one n-th generic strategic pattern GSPTn from n-th reference data RDTn, which are collected (clt) and include (n-1)-th reference data and the "n-1"-th device-specific sub-usage data SUDTn-1 on the basis of the n-th reference data RDTn the n-th generic strategic pattern GSPTn for the n-th generic sleep schedule is calculated clc.

Thereby the calculation is carried out again preferably according to a "If-Then-rule".

**2.** In a second step the n-th generic sleep schedule GSLSn, destined for the wireless device $WD_{opt}$ and sent snd - according to the wireless access point implementation - from the server-related messaging protocol entity $MPE_{sv}$ to the wireless device to be optimized $WD_{opt}$, correspond essentially to the device-specific sleep schedule or alternatively - according to the data cloud implementation - the n-th generic sleep schedule GSLSn, destined for the wireless device $WD_{opt}$, the server-related messaging protocol entity $MPE_{sv}$ received from the data cloud DCL and forwarded fwd from the server-related messaging protocol entity $MPE_{sv}$ to the wireless device to be optimized $WD_{opt}$, correspond essentially to the device-specific sleep schedule.

**Claims**

1. Method for optimizing energy consumption of a wireless device ($WD_{opt}$) with limited energy resources, in which within at least one wireless environment (WE1, WE2, WE3) including each a wireless mesh network (WMN), which integrates mesh-technology based for each wireless environment (WE1, WE2, WE3) <i> numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$) with the wireless device to be optimized ($WD_{opt}$) and <ii> at least one wireless access point ($WAP_{WE1}$, $WAP_{WE2}$, $WAP_{WE3}$) using permanent energy resources, wherein the devices according to a client-server-messaging protocol are designed to a "publisher-subscriber" principle, in particular an open network protocol for "Message Queuing Telemetry Transport <MQTT>" of "Internet of Things <IoT>"-to-"Internet of Things <IoT>" / "Machine-to-Machine <M2M>" communication, logical communication links (LCL) for data transfer transferring data network-immanent or cross-network are provided, which transport message data (MDT, LDT, RDT1, SLS, GSLS1, GSLS2, GSLSn) <u>either</u> between a client-related messaging protocol entity ($MPE_{cl}$) of each the numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$) and a server-related messaging protocol entity ($MPE_{sv}$) of the wireless access point ($WAP_{WE1}$, $WAP_{WE2}$, $WAP_{WE3}$) <u>or</u> between a client-related messaging protocol entity ($MPE_{cl}$) of each the numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$) via a server-related messaging protocol entity ($MPE_{sv}$) of the wireless access point ($WAP_{WE1}$, $WAP_{WE2}$, $WAP_{WE3}$) and a data cloud (DCL) being assigned to the wireless environment (WE1, WE2, WE3) and to which the logical communication links are expanded, **characterized by**:

   **a)** in the course of a local device-specific, computer-implemented optimization implemented in the wireless access point ($WAP_{WE1}$, $WAP_{WE2}$, $WAP_{WE3}$) assigned to the wireless device to be optimized ($WD_{opt}$) within the corresponding wireless environment (WE1, WE2, WE3) <u>respectively</u> in the data cloud (DCL)

   **a1)** collecting (clt) log data (LDT) of the wireless device to be optimized ($WD_{opt}$) at the server-related messaging protocol entity ($MPE_{sv}$), which are transferred network-immanent via the logical communication links (LCL) to the wireless access point ($WAP_{WE1}$, $WAP_{WE2}$, $WAP_{WE3}$) <u>respectively</u> via the wireless access point ($WAP_{WE1}$, $WAP_{WE2}$, $WAP_{WE3}$) and the logical communication links (LCL) to the data cloud (DCL),
   **a2)** determining (dtm) from a content of the collected log data (LDT) device-specific historical usage data ($UDT_h$),
   **a3)** identifying (idf) out of the device-specific historical usage data ($UDT_h$) a device-specific usage pattern (UPT),
   **a4)** creating (crt), in particular by computer calculation, out of the device-specific usage pattern (UPT) a device-specific sleep schedule (SLS) according to which the wireless device to be optimized ($WD_{opt}$) is put to sleep in anticipated non-usage times,

   **b)** sending (snd) the device-specific sleep schedule (SLS) destined for the wireless device to be optimized ($WD_{opt}$) from the server-related messaging protocol entity ($MPE_{sv}$) of the wireless access point ($WAP_{WE1}$, $WAP_{WE2}$, $WAP_{WE3}$) to the wireless device to be optimized ($WD_{opt}$) <u>respectively</u> forwarding (fwd) the device-specific sleep schedule received from the data cloud (DCL) and destined for the wireless device to be optimized ($WD_{opt}$) by the server-related messaging protocol entity ($MPE_{sv}$) to the wireless device to be optimized ($WD_{opt}$).

2. Method according to claim 1, **characterized in that** the device-specific sleep schedule (SLS) received by the client-related messaging protocol entity ($MPE_{cl}$) of the wireless device to be optimized ($WD_{opt}$) is applied in the wireless device ($WD_{opt}$) by implementing

   a power saving profile for the wireless device ($WD_{opt}$), in particular for hardware components of the wireless device ($WD_{opt}$) such as a central processing unit (CPU) and WiFi-adapter (WAD), and/or
   time-based or event-based sleep schedules or schedules for different power savings modes, such as clock down measures, sleep periods, timing of background processes, in particular for hardware components of the wireless device ($WD_{opt}$) such as a central processing unit (CPU) and WiFi-adapter (WAD).

3. Method according to claim 1 or 2, **characterized in that**

   **a)** in the course of a global cross-device based, computer-implemented optimization implemented <u>either</u> in the wireless access point ($WAP_{WE1}$, $WAP_{WE2}$, $WAP_{WE3}$) assigned to the wireless device to be optimized ($WD_{opt}$) within the corresponding wireless environment (WE1, WE2, WE3) or in the data cloud (DCL), when in a first iterative optimization step (IOS1) of a n-fold iteration-optimization-process (n-IOP) with $n \in \mathbb{N}$ the log data (LDT) of the wireless device to be optimized ($WD_{opt}$) are not available at the server-related messaging protocol entity ($MPE_{sv}$), in particular because of the wireless device to be optimized ($WD_{opt}$) is launched newly within the wireless mesh network (WMN) of the at least one wireless environment (WE1, WE2, WE3), and thus the device-specific historical usage data cannot be determined (dtm),

a first generic sleep schedule (GSLS1) is created (crt) by deriving (drv) in order to train (trn) the first generic sleep schedule (GSLS1) at least one first generic strategic pattern (GSPT1) from first reference data (RDT1), which are collected (clt) from of other devices ($WD_{1,WE1}$, $WD_{2,WE1}$, $WD_{3,WE1}$, ...$WD_{n,WE1}$; $WD_{1,WE2}$, $WD_{2,WE2}$,... $WD_{n,WE2}$; $WD_{1,WE3}$, ...$WD_{n,WE3}$) of the numerous wireless devices ($WD_{1,WE1}$, $WD_{2,WE1}$, $WD_{3,WE1}$,... $WD_{opt}$, ...$WD_{n,WE1}$; $WD_{1,WE2}$, $WD_{2,WE2}$,... $WD_{opt}$, ...$WD_{n,WE2}$; $WD_{1,WE3}$, ... $WD_{opt}$, ...$WD_{n,WE3}$) except the wireless device to be optimized ($WD_{opt}$) and transferred either network-immanent or cross-network based via the logical communication links (LCL) to the wireless access point ($WAP_{WE1}$, $WAP_{WE2}$, $WAP_{WE3}$) respectively via the wireless access point ($WAP_{WE1}$, $WAP_{WE2}$, $WAP_{WE3}$) and the logical communication links (LCL) to the data cloud (DCL), such that on the basis of the first reference data,
in particular including **<i>** other device-specific historical data, **<ii>** other device-specific usage patterns identified out of the other device-specific historical data, **<iii>** other device-specific sleep schedules created out of the other device-specific usage patterns, **<iv>** device data about each other device of the other devices ($WD_{1,WE1}$, $WD_{2,WE1}$, $WD_{3,WE1}$, ...$WD_{n,WE1}$; $WD_{1,WE2}$, $WD_{2,WE2}$,... ...$WD_{n,WE2}$; $WD_{1,WE3}$, ...$WD_{n,WE3}$) being used, **<v>** topology data about the other devices ($WD_{1,WE1}$, $WD_{2,WE1}$, $WD_{3,WE1}$, ...$WD_{n,WE1}$; $WD_{1,WE2}$, $WD_{2,WE2}$,... $WD_{n,WE2}$; $WD_{1,WE3}$, ...$WD_{n,WE3}$) relations to each other, **<vi>** interactions data about individual interactions of the other devices ($WD_{1,WE1}$, $WD_{2,WE1}$, $WD_{3,WE1}$, ...$WD_{n,WE1}$; $WD_{1,WE2}$, $WD_{2,WE2}$,... $WD_{n,WE2}$; $WD_{1,WE3}$, ...$WD_{n,WE3}$) , **<vii>** typical interaction patterns of the other devices ($WD_{1,WE1}$, $WD_{2,WE1}$, $WD_{3,WE1}$, ...$WD_{n,WE1}$; $WD_{1,WE2}$, $WD_{2,WE2}$,... $WD_{n,WE2}$; $WD_{1,WE3}$, ...$WD_{n,WE3}$), and/or **<viii>** success criteria of the other device-specific sleep schedules such as "Key Performance Indicators <KPI's>" for device energy consumption and/or "Key Performance Indicators <KPI's>",
the first generic strategic pattern (GSPT1) for the first generic sleep schedule (GSLS1) is calculated (clc), in particular according to a "If-Then-rule", and

**b)** the first generic sleep schedule (GSLS1) destined for the wireless device ($WD_{opt}$) is sent (snd) instead of the sleep schedule (SLS) from the server-related messaging protocol entity ($MPE_{sv}$) to the wireless device to be optimized ($WD_{opt}$) respectively the first generic sleep schedule (GSLS1), destined for the wireless device to be optimized ($WD_{opt}$) and the server-related messaging protocol entity ($MPE_{sv}$) received from the data cloud (DCL), is forwarded (fwd) instead of the sleep schedule (SLS) by the server-related messaging protocol entity ($MPE_{sv}$) to the wireless device to be optimized ($WD_{opt}$).

4. Method according to claim 3, **characterized in that**

**a)** in the course of the global cross-device based, computer-implemented optimization implemented in the wireless access point ($WAP_{WE1}$, $WAP_{WE2}$, $WAP_{WE3}$) assigned to the wireless device to be optimized ($WD_{opt}$) within the corresponding wireless environment (WE1, WE2, WE3) respectively in the data cloud (DCL), when in a second iterative optimization step (IOS2) of the n-fold iteration-optimization-process (n-IOP) with $n \in \mathbb{N}$ the first generic sleep schedule (GSLS1) and/or the first generic strategic pattern (GSPT1) as a first device-specific sub-usage data (SUDT1) of the wireless device to be optimized ($WD_{opt}$) are available,

a second generic sleep schedule (GSLS2) is created (crt) by deriving (drv) in order to train (trn) the second generic sleep schedule (GSLS2) at least one second generic strategic pattern (GSPT2) from second reference data (RDT2), which are collected (clt) and include the first reference data (RDT1) and the first device-specific sub-usage data (SUDT1), wherein the first reference data (RDT1) are transferred network-immanent or cross-network based via the logical communication links (LCL) to the wireless access point ($WAP_{WE1}$, $WAP_{WE2}$, $WAP_{WE3}$) <u>respectively</u> via the wireless access point ($WAP_{WE1}$, $WAP_{WE2}$, $WAP_{WE3}$) and the logical communication links (LCL) to the data cloud (DCL), such that on the basis of the second reference data (RDT2) the second generic strategic pattern (GSPT2) for the second generic sleep schedule (GSLS2) is calculated (clc), in particular according to a "If-Then-rule", and

**b)** the second generic sleep schedule (GSLS2) destined for the wireless device ($WD_{opt}$) is used to refine the first generic sleep schedule (GSLS1) and sent (snd) instead of the first generic sleep schedule (GSLS1) from the server-related messaging protocol entity ($MPE_{sv}$) to the wireless device to be optimized ($WD_{opt}$) <u>respectively</u> the second generic sleep schedule (GSLS2), destined for the wireless device ($WD_{opt}$) and the server-related messaging protocol entity ($MPE_{sv}$) received from the data cloud (DCL), is used to refine the first generic sleep schedule (GSLS1) and forwarded (fwd) instead of first generic sleep schedule (GSLS1) from the server-related messaging protocol entity ($MPE_{sv}$) to the wireless device to be optimized ($WD_{opt}$).

5. Method according to claim 4, **characterized in that**

   **a**) in the course of the global cross-device based, computer-implemented optimization implemented in the wireless access point ($WAP_{WE1}$, $WAP_{WE2}$, $WAP_{WE3}$) assigned to the wireless device to be optimized ($WD_{opt}$) within the corresponding wireless environment (WE1, WE2, WE3) <u>respectively</u> in the data cloud (DCL) the n-fold iteration-optimization-process with $n \in \mathbb{N}$ is run through by "n" iterative optimization steps (IOS1, ...IOSn) until a "n-1"-th device-specific sub-usage data (SUDTn-1) formed by a sum of the first generic sleep schedule (GSLS1) to a "n-1"-th generic sleep schedule and/or a sum of the first generic strategic pattern (GSPT1) to a "n-1"-th generic strategic pattern of the wireless device to be optimized ($WD_{opt}$), which are available, correspond essentially to the device-specific historical usage data ($UDT_h$), wherein accordingly

   a n-th generic sleep schedule (GSLSn) is created (crt), by deriving (drv) in order to train (trn) the n-th generic sleep schedule (GSLSn) at least one n-th generic strategic pattern (GSPTn) from n-th reference data (RDTn) being collected (clt) and including (n-1)-th reference data and the "n-1"-th device-specific sub-usage data (SUDTn-1) such that on the basis of the n-th reference data (RDTn) the n-th generic strategic pattern (GSPTn) for the n-th generic sleep schedule is calculated (clc), in particular according to a "If-Then-rule", and

   **b)** the n-th generic sleep schedule (GSLSn), destined for the wireless device ($WD_{opt}$) and sent (snd) from the server-related messaging protocol entity ($MPE_{sv}$) to the wireless device to be optimized ($WD_{opt}$), correspond essentially to the device-specific sleep schedule (SLS) <u>respectively</u> the n-th generic sleep schedule (GSLSn), destined for the wireless device ($WD_{opt}$), the server-related messaging protocol entity ($MPE_{sv}$) received from the data cloud (DCL) and forwarded (fwd) from the server-related messaging protocol entity ($MPE_{sv}$) to the wireless device to be optimized ($WD_{opt}$), correspond essentially to the device-specific sleep schedule (SLS).

6. System (SYS) for optimizing energy consumption of a wireless device ($WD_{opt}$) with limited energy resources, in which within at least one wireless environment (WE1, WE2, WE3) including each a wireless mesh network (WMN), which integrates mesh-technology based for each wireless environment (WE1, WE2, WE3) **<i>** numerous wireless devices ($WD_{1,WE1}$, $WD_{2,WE1}$, $WD_{3,WE1}$,... $WD_{opt}$... $WD_{n,WE1}$; $WD_{1,WE2}$, $WD_{2,WE2}$,... $WD_{opt}$,.... $WD_{n,WE2}$; $WD_{1,WE3}$,... $WD_{opt}$,... $WD_{n,WE3}$) with the wireless device to be optimized ($WD_{opt}$) and **<ii>** at least one wireless access point ($WAP_{WE1}$, $WAP_{WE2}$, $WAP_{WE3}$) using permanent energy resources, wherein the devices according to a client-server-messaging protocol are designed to a "publisher-subscriber" principle, in particular an open network protocol for "Message Queuing Telemetry Transport <MQTT>" of "Internet of Things <IoT>"-to-"Internet of Things <IoT>" / "Machine-to-Machine <M2M>" communication, logical communication links (LCL) for data transfer transferring data network-immanent or cross-network are provided, which transport message data (MDT, LDT, RDT1, SLS, GSLS1, GSLS2, GSLSn) either between a client-related messaging protocol entity ($MPE_{cl}$) of each the numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$) and a server-related messaging protocol entity ($MPE_{sv}$) of the wireless access point ($WAP_{WE1}$, $WAP_{WE2}$, $WAP_{WE3}$) or between a client-related messaging protocol entity ($MPE_{cl}$) of each the numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$,... $WD_{n,WE3}$) via a server-related messaging protocol entity ($MPE_{sv}$) of the wireless access point ($WAP_{WE1}$, $WAP_{WE2}$, $WAP_{WE3}$) and a data cloud (DCL) being assigned to the wireless environment (WE1, WE2, WE3) and to which the logical communication links (LCL) are expanded,
**characterized by**:

- a computer-implemented optimization unit (OZU) including a non-volatile, processor-readable storage medium (STM) having processor-readable program-instructions of a program module (PGM) for optimizing energy consumption including a local device-specific optimization module ($OZM_{loc}$) and a global cross-device based optimization module ($OZM_{glo}$) stored in the non-transitory, processor-readable storage medium (STM) and a processor (PRC) connected with the storage medium (STM) executing the processor-readable program-instructions of the program module (PGM) to enable the energy consumption optimization, wherein
the computer-implemented optimization unit (OZU) implemented either in the wireless access point ($WAP_{WE1}$, $WAP_{WE2}$, $WAP_{WE3}$) assigned to the wireless device to be optimized ($WD_{opt}$) within the corresponding wireless environment (WE1, WE2, WE3) or in the data cloud (DCL) forms a functional unit with the client-related messaging protocol entity ($MPE_{cl}$) and the server-related messaging protocol entity ($MPE_{sv}$) assigned directly or indirectly via the logical communications links (LCL) to the optimization unit (OZU) and is designed such that

a) in the course of a local device-specific, computer-implemented optimization by executing (exe) the local device-specific optimization module ($OZM_{loc}$) through the processor (PRC)

a1) log data (LDT) of the wireless device to be optimized ($WD_{opt}$) at the server-related messaging protocol entity ($MPE_{sv}$) are collected (clt), which are transferred network-immanent via the logical communication links (LCL) to the wireless access point ($WAP_{WE1}$, $WAP_{WE2}$, $WAP_{WE3}$) respectively via the wireless access point ($WAP_{WE1}$, $WAP_{WE2}$, $WAP_{WE3}$) and the logical communication links (LCL) to the data cloud (DCL),

a2) from a content of the collected log data (LDT) device-specific historical usage data ($UDT_h$) are determined (dtm),

a3) out of the device-specific historical usage data ($UDT_h$) a device-specific usage pattern (UPT) is identified (idf),

a4) out of the device-specific usage pattern (UPT) a device-specific sleep schedule (SLS) is created (crt), in particular by computer calculation, according to which the wireless device to be optimized ($WD_{opt}$) is put to sleep in anticipated non-usage times,

b) the device-specific sleep schedule (SLS) destined for the wireless device to be optimized ($WD_{opt}$) is sent (snd) from the server-related messaging protocol entity ($MPE_{sv}$) of the wireless access point ($WAP_{WE1}$, $WAP_{WE2}$, $WAP_{WE3}$) to the wireless device to be optimized ($WD_{opt}$) respectively the device-specific sleep schedule (SLS) received from the data cloud (DCL) and destined for the wireless device to be optimized ($WD_{opt}$) is forwarded (fwd) by the server-related messaging protocol entity ($MPE_{sv}$) to the wireless device to be optimized ($WD_{opt}$).

7. System (SYS) according to claim 6, **characterized in that**

the device-specific sleep schedule (SLS) received by the client-related messaging protocol entity ($MPE_{cl}$) of the wireless device to be optimized ($WD_{opt}$) is applied in the wireless device ($WD_{opt}$) by implementing
a power saving profile for the wireless device ($WD_{opt}$), in particular for hardware components of the wireless device ($WD_{opt}$) such as a central processing unit (CPU) and WiFi-adapter (WAD), and/or
time-based or event-based sleep schedules or schedules for different power savings modes, such as clock down measures, sleep periods, timing of background processes, in particular for hardware components of the wireless device ($WD_{opt}$) such as a central processing unit (CPU) and WiFi-adapter (WAD).

8. System (SYS) according to claim 6 or 7, **character-**

**ized in that**
the computer-implemented optimization unit (OZU) is designed such that

**a)** in the course of a global cross-device based, computer-implemented optimization by executing (exe) the global cross-device based optimization module ($OZM_{glo}$) through the processor (PRC),
when in a first iterative optimization step (IOS1) of a n-fold iteration-optimization-process (n-IOP) with $n \in \mathbb{N}$ the log data (LD1) of the wireless device to be optimized ($WD_{opt}$) are not available at the server-related messaging protocol entity ($MPE_{sv}$), in particular because of the wireless device to be optimized ($WD_{opt}$) is launched newly within the wireless mesh network (WMN) of the at least one wireless environment (WE1, WE2, WE3), and thus the device-specific historical usage data ($UDT_h$) cannot be determined (dtm),

a first generic sleep schedule (GSLS1) is created (crt) by deriving (drv) in order to train (trn) the first generic sleep schedule (GSLS1) at least one first generic strategic pattern (GSPT1) from first reference data (RDT1), which are collected (clt) from other devices ($WD_{1,WE1}$, $WD_{2,WE1}$, $WD_{3,WE1}$,... $WD_{n,WE1}$; $WD_{1,WE2}$, $WD_{2,WE2}$,... $WD_{n,WE2}$; $WD_{1,WE3}$,... $WD_{n,WE3}$) of the numerous wireless devices ($WD_{1,WE1}$, $WD_{2,WE1}$, $WD_{3,WE1}$,... $WD_{opt}$,... $WD_{n,WE1}$; $WD_{1,WE2}$, $WD_{2,WE2}$,... $WD_{opt}$,... $WD_{n,WE2}$; $WD_{1,WE3}$,... $WD_{opt}$, ...$WD_{n,WE3}$) except the wireless device to be optimized ($WD_{opt}$) and transferred either network-immanent or cross-network based via the logical communication links (LCL) to the wireless access point ($WAP_{WE1}$, $WAP_{WE2}$, $WAP_{WE3}$) respectively via the wireless access point ($WAP_{WE1}$, $WAP_{WE2}$, $WAP_{WE3}$) and the logical communication links (LCL) to the data cloud (DCL), such that on the basis of the first reference data (RDT1),
in particular including **<i>** other device-specific historical data, **<ii>** other device-specific usage patterns identified out of the other device-specific historical data, **<iii>** other device-specific sleep schedules created out of the other device-specific usage patterns, **<iv>** device data about each other device of the other devices ($WD_{1,WE1}$, $WD_{2,WE1}$, $WD_{3,WE1}$, ...$WD_{n,WE1}$; $WD_{1,WE2}$, $WD_{2,WE2}$,... ...$WD_{n,WE2}$; $WD_{1,WE3}$, ...$WD_{n,WE3}$) being used, **<v>** topology data about the other devices ($WD_{1,WE1}$, $WD_{2,WE1}$, $WD_{3,WE1}$, ...$WD_{n,WE1}$; $WD_{1,WE2}$, $WD_{2,WE2}$,......$WD_{n,WE2}$; $WD_{1,WE3}$, ...$WD_{n,WE3}$) relations to each other, **<vi>** interactions data about individual interactions of the other devices ($WD_{1,WE1}$, $WD_{2,WE1}$, $WD_{3,WE1}$,... $WD_{n,WE1}$; $WD_{1,WE2}$, $WD_{2,WE2}$,... $WD_{n,WE2}$; $WD_{1,WE3}$,... $WD_{n,WE3}$), **<vii>** typical interaction patterns of the other devices ($WD_{1,WE1}$, $WD_{2,WE1}$, $WD_{3,WE1}$,... $WD_{n,WE1}$; $WD_{1,WE2}$, $WD_{2,WE2}$,... $WD_{n,WE2}$; $WD_{1,WE3}$,... $WD_{n,WE3}$) , and/or **<viii>** success criteria of the other device-specific sleep schedules such as "Key Performance Indicators <KPI's>" for device energy consumption and/or "Key Performance Indicators <KPI's>",
the first generic strategic pattern (GSPT1) for the first generic sleep schedule (GSLS1) is calculated (clc), in particular according to a "If-Then-rule", and

**b)** the first generic sleep schedule (GSLS1) destined for the wireless device ($WD_{opt}$) is sent (snd) instead of the sleep schedule (SLS) from the server-related messaging protocol entity ($MPE_{sv}$) to the wireless device to be optimized ($WD_{opt}$) respectively the first generic sleep schedule (GSLS1), destined for the wireless device to be optimized ($WD_{opt}$) and the server-related messaging protocol entity ($MPE_{sv}$) received from the data cloud (DCL), is forwarded (fwd) instead of the sleep schedule (SLS) by the server-related messaging protocol entity ($MPE_{sv}$) to the wireless device to be optimized ($WD_{opt}$).

9. System (SYS) according to claim 8, **characterized in that** the computer-implemented optimization unit (OZU) is designed such that

**a)** in the course of a global cross-device based, computer-implemented optimization by executing the global cross-device based optimization module ($OZM_{glo}$) through the processor (PRC), when in a second iterative optimization step (IOS2) of the n-fold iteration-optimization-process (n-IOP) with $n \in \mathbb{N}$ the first generic sleep schedule (GSLS1) and/or the first generic strategic pattern (GSPT1) as a first device-specific sub-usage data (SUDT1) of the wireless device to be optimized ($WD_{opt}$) are available in the computer-implemented optimization unit (OZU),

a second generic sleep schedule (GSLS2) is created (crt) by deriving (drv) in order to train (trn) the second generic sleep schedule (GSLS2) at least one second generic strategic pattern (GSPT2) from second reference data (RDT2), which are collected (clt) and include the first reference data (RDT1) and the first device-specific sub-usage data (SUDT1), wherein the first reference data (RDT1) are transferred network-immanent or cross-network based via the logical communication links (LCL) to the wireless access point ($WAP_{WE1}$, $WAP_{WE2}$, $WAP_{WE3}$) respectively via the wireless access point ($WAP_{WE1}$, $WAP_{WE2}$, $WAP_{WE3}$) and the logical communication links (LCL) to the data cloud (DCL), such that on the basis of the second reference data (RDT2) the second generic strategic pattern (GSPT2) for the second generic sleep schedule (GSLS2) is calculated (clc), in particular according to a "If-Then-rule", and

**b**) the second generic sleep schedule (GSLS2) destined for the wireless device ($WD_{opt}$) is used to refine the first generic sleep schedule (GSLS1) and sent (snd) instead of the first generic sleep schedule (GSLS1) from the server-related messaging protocol entity ($MPE_{sv}$) to the wireless device to be optimized ($WD_{opt}$) respectively the second generic sleep schedule (GSLS2), destined for the wireless device ($WD_{opt}$) and the server-related messaging protocol entity ($MPE_{sv}$) received from the data cloud (DCL), is used to refine the first generic sleep schedule (GSLS1) and forwarded (fwd) instead of first generic sleep schedule (GSLS1) from the server-related messaging protocol entity ($MPE_{sv}$) to the wireless device to be optimized ($WD_{opt}$).

10. System (SYS) according to claim 9, **characterized in that** the computer-implemented optimization unit (OZU) is designed such that

**a**) in the course of a global cross-device based, computer-implemented optimization by executing (exe) the global cross-device based optimization module ($OZM_{glo}$) through the processor (PRC) the n-fold iteration-optimization-process with $n \in \mathbb{N}$ is run through by "n" iterative optimization steps (IOS1, ...IOSn) until a "n-1"-th device-specific sub-usage data (SUDTn-1) formed by a sum of the first generic sleep schedule (GSLS1) to a "n-1"-th generic sleep schedule and/or a sum of the first generic strategic pattern (GSPT1) to a "n-1"-th generic strategic pattern of the wireless device to be optimized ($WD_{opt}$), which are available in the computer-implemented optimization unit (OZU), correspond essentially to the device-specific historical usage data ($UDT_h$), wherein accordingly a n-th generic sleep schedule (GSLSn) is created (crt), by deriving (drv) in order to train (trn) the n-th generic sleep schedule (GSLSn) at least one n-th generic strategic pattern (GSPTn) from n-th reference data (RDTn) being collected (clt) and including (n-1)-th reference data and the "n-1"-th device-specific sub-usage data (SUDTn-1) such that on the basis of the n-th reference data (RDTn) the n-th generic strategic pattern (GSPTn) for the n-th generic sleep schedule is calculated (clc), in particular according to a "If-Then-rule", and

**b**) the n-th generic sleep schedule (GSLSn), destined for the wireless device ($WD_{opt}$) and sent (snd) from the server-related messaging protocol entity ($MPE_{sv}$) to the wireless device to be optimized ($WD_{opt}$), correspond essentially to the device-specific sleep schedule (SLS) respectively the n-th generic sleep schedule (GSLSn), destined for the wireless device ($WD_{opt}$), the server-related messaging protocol entity ($MPE_{sv}$) received from the data cloud (DCL) and forwarded (fwd) from the server-related messaging protocol entity ($MPE_{sv}$) to the wireless device to be optimized ($WD_{opt}$), correspond essentially to the device-specific sleep schedule (SLS).

11. System (SYS) according to one of the claims 1 to 10, **characterized in that** the computer-implemented optimization unit (OZU) with the local device-specific optimization module ($OZM_{loc}$) and the global cross-device based optimization module ($OZM_{glo}$) of the program module (PGM) for optimizing energy consumption are designed as a Computer-Program-Product, e.g., an APP, which is uploadable into a control unit (CTU) of the wireless access point ($WAP_{WE1}$, $WAP_{WE2}$, $WAP_{WE3}$) or a server (SV) of the data cloud (DCL).

# FIG 1

| FIG 1A |
|--------|
| FIG 1B |

# FIG 1A

EP 4 329 383 A1

FIG 1B

# FIG 2

# FIG 3

$WD_{1,WE1}$, $WD_{2,WE1}$, $WD_{3,WE1}$...$WD_{n,WE1}$; $WD_{1,WE2}$, $WD_{2,WE2}$...$WD_{n,WE2}$; $WD_{1,WE3}$...$WD_{n,WE3}$

# FIG 4

$WD_{1,WE1}, WD_{2,WE1}, WD_{3,WE1}...WD_{n,WE1}; WD_{1,WE2}, WD_{2,WE2}...WD_{n,WE2}; WD_{1,WE3}...WD_{n,WE3}$

RDT1
clt
snd
fwd $WD_{opt}$
GSLS2
LCL
WIF
SV
DCL

**Wireless access point**

Wireless interface

$MPE_{SV}$

Server-related messaging protocol entity according to a client-server-messaging protocol designed to a "publisher-subscriber" principle

SYS

CTU — Control unit

**Data cloud** DB

**Server**

Control unit

Data base

LCL

CTU

GSLS2

RDT1

$WAP_{WE1}, WAP_{WE2}, WAP_{WE3}$

SYS

n-IOP

Upload

GSLS2

OZU

PRC

Upload

GSLS2

**Processor**

drv
clt
clc
crt
trn

RDT2

GSPT2

GSLS2

IOS2

exe
exe
exe

SUDT1

$OZM_{loc}$

$OZM_{glo}$

SUDT1
STM

Storage medium

Program module

Local device-specific optimization module

Global cross-device based optimization module

PGM

**Computer-implemented optimization unit**
e.g. Computer-Program-Product as APP

# FIG 5

Europäisches
Patentamt

European
Patent Office

Office européen
des brevets

# EUROPEAN SEARCH REPORT

Application Number

EP 22 19 2126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/047254 A1 (HA WAI-LEUNG [HK] ET AL) 13 February 2014 (2014-02-13) | 1,2,6,7 | INV.<br>H04W52/02 |
| A | * paragraphs [0002], [0034] – [0040], [0044] – [0051]; figures 1,4,5,9 * | 3-5,8-11 | G06F1/3203 |
| Y | SAMIKWA ERIC ET AL: "Adaptive Early Exit of Computation for Energy-Efficient and Low-Latency Machine Learning over IoT Networks", 2022 IEEE 19TH ANNUAL CONSUMER COMMUNICATIONS & NETWORKING CONFERENCE (CCNC), IEEE, 8 January 2022 (2022-01-08), pages 200-206, XP034083302, DOI: 10.1109/CCNC49033.2022.9700550 [retrieved on 2022-01-31] | 1,2,6,7 | |
| A | * Eg. 2;<br>page 201, paragraph IV; figures 1,3 * | 3-5,8-11 | |

TECHNICAL FIELDS
SEARCHED (IPC)

H04W
G06F

The present search report has been drawn up for all claims

| Place of search | Date of completion of the search | Examiner |
|---|---|---|
| The Hague | 9 February 2023 | Amorotti, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2126

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | Publication date |
|---|---|---|---|---|
| US 2014047254 | A1 | 13-02-2014 | DE 102013108346 A1 | 13-02-2014 |
| | | | GB 2506254 A | 26-03-2014 |
| | | | GB 2515424 A | 24-12-2014 |
| | | | US 2014047254 A1 | 13-02-2014 |

For more details about this annex : see Official Journal of the European Patent Office, No. 12/82

**REFERENCES CITED IN THE DESCRIPTION**

**Patent documents cited in the description**

- EP 21197359